(19) Europäisches Patentamt
European Patent Office
Office européen des brevets

(11) **EP 1 792 209 B1**

(12) **EUROPEAN PATENT SPECIFICATION**

(45) Date of publication and mention
of the grant of the patent:
**10.12.2008 Bulletin 2008/50**

(51) Int Cl.:
***G01V 5/00*** (2006.01)

(21) Application number: **05782947.5**

(86) International application number:
**PCT/IB2005/052950**

(22) Date of filing: **09.09.2005**

(87) International publication number:
**WO 2006/027756 (16.03.2006 Gazette 2006/11)**

(54) **COHERENT SCATTER IMAGING**

Bildgebung durch kohärente Streuung

SYSTEME D'IMAGERIE PAR DIFFUSION COHERENTE

(84) Designated Contracting States:
**AT BE BG CH CY CZ DE DK EE ES FI FR GB GR HU IE IS IT LI LT LU LV MC NL PL PT RO SE SI SK TR**

(30) Priority: **11.09.2004 GB 0420222**

(43) Date of publication of application:
**06.06.2007 Bulletin 2007/23**

(73) Proprietor: **Koninklijke Philips Electronics N.V.
5621 BA Eindhoven (NL)**

(72) Inventors:
• **GRASS, Michael c/o Philips Intellectual
Redhill Surrey RH1 5HA (GB)**
• **SCHLOMKA, Jens-Peter c/o Philips Intellectual
Redhill Surrey RH1 5HA (GB)**
• **VAN STEVENDAAL, Udo c/o Philips Intellectual
Redhill Surrey RH1 5HA (GB)**

(74) Representative: **Schouten, Marcus Maria
Philips
Intellectual Property & Standards
P.O. Box 220
5600 AE Eindhoven (NL)**

(56) References cited:
WO-A-99/66317          US-A- 5 187 731
US-A- 5 692 029          US-A- 6 054 712

• VAN STEVENDAAL U ET AL: "A reconstruction algorithm for coherent scatter computed tomography based on filtered back-projection" MEDICAL PHYSICS, AMERICAN INSTITUTE OF PHYSICS. NEW YORK, US, vol. 30, no. 9, September 2003 (2003-09), pages 2465-2474, XP012012232 ISSN: 0094-2405

**EP 1 792 209 B1**

**Description**

The invention relates to an apparatus and method for coherent scatter imaging, and in particular, but not exclusively, to an apparatus and method for coherent scatter computed tomography.

There is an ongoing need for fast and reliable materials scanners. One area of particular commercial interest is that of fast baggage scanners that can be used in a number of instances, but are often particularly used to scan airline baggage. Another area of particular commercial interest is in the field of medical scanners.

The interaction of X-ray photons with matter in a certain energy range between 20 and 150 keV, for instance, can be described by photoelectric absorption and scattering. Two different types of scattering exist: incoherent or Compton-scattering on the one hand, and coherent or Rayleigh-scattering on the other hand. Whereas the Compton-scattering varies slowly with angle, Rayleigh-scattering is strongly forward directed and has a distinct structure, characteristic of each type of material. Coherent X-ray scattering is a common tool for analyzing the molecular structure of materials in e.g. X-ray crystallography or X-ray diffraction in the semiconductor industry. The molecular structure function is a fingerprint of the material and allows good discrimination. For example, plastic explosives can be distinguished from harmless food products.

For medical use as well as for baggage inspection, photoelectric absorption, not scattering, is generally used in commercial computed tomography (CT) scanners and C-arm systems. These systems use a variety of calculation techniques to calculate from measured X-ray data the X-ray absorption properties of the sample at different locations in the sample, rather than simply provide an X-ray image of the sample as in conventional X-ray imaging. For example, US2002/0150202A1 describes a CT apparatus using a fan beam and describing also a gantry rotating the apparatus.

In modern equipment, a cone-shaped X-ray beam is often used, in so called "cone-beam" computed tomography. US2004/0076265 describes a CT scanner of this type.

Since material discrimination is limited to differences in the total linear attenuation coefficient, this method can only provide good discrimination if the linear attenuation coefficients of the interested regions differ perceptibly. Furthermore, tissue or material identification using only the linear attenuation coefficient can be ambiguous, if two different materials exhibit the same attenuation coefficient.

Since scattered photons contain additional object information, they can be used for a better material discrimination.

US 5,692,029 describes a detector that uses backscattered X-rays for a baggage handling application.

Coherent scattering has been presented as a suitable means for baggage scanning in Strecker et al "Detection of Explosives in Airport Baggage using Coherent X-ray Scatter", SPIE Volume 2092 "Substance Detection Systems", 1993, pages 399 to 410. This document describes the different elastic scattering spectra of explosives and a number of other common materials.

Although no actual measurements are described of baggage samples, this document suggests that in order to meet speed requirements imaging is not feasible, and instead the energy spectrum, presumably of the whole baggage, is measured. Thus, the proposed system is unsuitable for detailed scanning of particular items within baggage.

Other X-ray scattering experiments are described in "X-ray scattering signatures for material identification", Speller et al, in the same volume, SPIE Volume 2092 "Substance Detection Systems", 1993, at pages 366 to 377.

US 6,054,712 discloses a CT apparatus adapted for measuring absorption data of an object and for reconstructing a three-dimensional absorption factor distribution from the absorption data. In addition, small-angle scattering curves are obtained, wherein the scattering curves are compared with a data base of scattering curves for known substances to identify the composition of the object within a beam which has caused the respective scattering curve. US 6,054,712 discloses a method of operating a coherent-scatter imaging system having a source, a collimator and a multi-channel detector, the method comprising: carrying out an X-ray scan; measuring a respective plurality of sample spectra by passing a pencil X-ray beam through the sample along a plurality of sample paths and measuring the respective plurality of sample spectra of scattered X-rays as a function of position at the detector; correcting the sample spectra to obtain corrected spectra; and combining the corrected spectra by correlating the corrected spectra to identify common features and analysing the common features.

In spite of interest over a number of years baggage scanners using coherent scattering have not, to date, moved out of the research lab into operational use. This is for a number of reasons, including a low signal strength inherent in coherent scattering and practical implementation difficulties.

Instead, baggage scanners in practice simply measure the absorption of X-rays, generally using conventional imaging. Such systems, however, do not provide good discrimination and it may be very hard to tell if a particular absorption feature is caused by explosive or any of a number of common materials, for example chocolate, plastics, or many others.

Similar problems arise in identifying features in medical CT scans.

Accordingly, there is a need for an improved coherent scatter imaging method and apparatus that can assist in these regards.

According to the invention there is provided a method of operating a coherent-scatter imaging system having a source, a collimator and a multi-channel detector, the method comprising:

carrying out an X-ray or computed tomography (CT) scan to identify a region of interest in a sample object; measuring a respective plurality of sample spectra by passing a pencil X-ray beam through the sample along a plurality of sample paths, each passing through the region of interest, and measuring the respective plurality of sample spectra as a function of position at the detector; correcting the sample spectra based on the respective distances between the region of interest and the detector to obtain corrected spectra; and combining the corrected spectra by correlating the corrected spectra to identify common features and analysing the common features as the features present in the region of interest.

Note that the measured spectra are not in fact only due to the region of interest and a number of the features will be from other parts of the sample. However, by correcting the spectra as if all of the spectrum was based on the region of interest a very simple calculation can be carried out that is much simpler than in prior art approaches. Since the invention is only concerned with the region of interest, the corruption of data from other regions does not create a problem.

Indeed, when the spectra from the different paths are combined, the features from the region of interest will be correctly located in the different spectra, whereas other features will not be and accordingly are less likely to correlate well with each other. Accordingly, the use of the inaccurate geometric assumption that the whole spectrum is due to the region of interest improves the method.

A particular benefit of the method is that it can readily be used by making minor modifications to conventional CT scanners or C-arm based X-Ray systems, in particular by adding collimators to generate the pencil beams. In general it can be used with any X-ray system with a 2D detector and a pencil beam being able to execute a relative movement between the system and the object.

The use of the pencil beams to irradiate the region of interest greatly reduces the total X-ray dose compared with that that would be required for conventional scanning of the sample.

As will be appreciated, the measured spectra are essentially absorption values and distance values from the centre of the spectrum. The step of correcting the spectra may correct the scale of each spectrum by multiplication of the distance values by a respective distance correction coefficient and may further correct the absorption values.

The distance correction coefficients may scale the respective spectra so that features in the region of interest are commonly scaled. Conveniently, the correction coefficients may scale the spectra to use the inverse scattering wavevector q as the measure of distance.

The step of correcting the absorption values may include correcting for two effects: firstly, that the effective detector area of the off-plane detector elements decreases with an increasing scatter angle and, secondly that the solid angle of a scattered beam which reaches the detector element decreases with the distance of this element to the scatter center.

Further corrections to the measured spectra may be carried out. For example, if an absorption map of the sample is known, giving values of the absorption coefficient at different locations within the sample, the measured X-ray intensities may be corrected for absorption along the X-ray path. This step may conveniently be carried out before the step of correcting absorption values for the two effects measured in the previous paragraph.

Preferably, the step of identifying a region of interest includes calculating the three dimensional distribution of absorption coefficients in the sample. This may be done by a CT process.

The step of identifying the region of interest may be done using the same or a different scanner to that used in the coherent scattering measurements.

The invention envisages a number of possibilities to combine spectra. In one approach, the step of combining the spectra includes:

providing a materials table defining the spectra of a plurality of different materials; fitting each of the corrected spectra to the materials table to identify the materials of each spectrum; and identifying the materials common to the plurality of spectra as materials that may be present in the region of interest.

In another approach the step of combining the spectra includes fitting the corrected spectra to a plurality of peaks having fitting parameters of peak position and peak width, and identifying peaks common between a plurality of spectra. In this approach, peaks are identified without reference to a materials table and the common peaks used as the features of the region of interest.

In another approach, the geometrically corrected spectra are simply added together.

The method may include measuring at least one reference spectrum for each sample spectrum by passing a reference beam through the sample, the reference beam being parallel to the sample beam but not passing through the region of interest, to obtain a reference spectrum (R); and correcting the sample spectrum (S) by subtracting the reference spectrum (R).

In another aspect the invention relates to a controller for a coherent-scatter imaging system having a collimated X-ray source and a detector, the controller including:

an interface for interfacing with a coherent scatter imaging system adapted to pass control signals to the coherent scatter imaging system and to receive image data from the detector; and

code for causing the coherent scatter imaging system and controller to scan a region of interest in a sample object, the code causing the coherent scatter imaging system and controller::

to pass a pencil X-ray beam through the sample along a plurality of sample paths, passing through the region of interest, and measuring a respective plurality of sample spectra as a function of position at the detector;

to correct the spectra based on the respective distances between the region of interest and the detector to obtain corrected spectra; and

to combine the spectra by correlating the spectra to identify common features and analysing the common features as the features present in the region of interest.

The controller may include a materials table defining the spectra of a plurality of different materials; wherein the code is adapted to fit each of the measured spectra to the materials table to identify the materials of each spectrum; and to identify the materials common to the spectra as materials that may be present in the region of interest.

Alternatively, the code to combine the spectra may be adapted to fit the spectra to a plurality of peaks having fitting parameters of peak position and peak width, and to identify peaks common between a plurality of spectra.

In another aspect, the invention relates to a coherent-scatter computed imaging system comprising:

an X-ray source for generating X-rays;
a collimator for producing a collimated pencil beam of X-rays from the X-ray source;
a sample support for holding a sample;
a multichannel x-ray detector for detecting x-rays elastically scattered by the sample as a function of position;
a framework for supporting the X-ray source, collimator and multichannel x-ray detector;
a driver for moving the framework; and
a controller as set out above.

The collimator may be moveable between a first position in which the collimator is spaced away from the beam and a second position in the X-ray beam to allow a pencil beam coherent scatter imaging method to be carried out.

The invention also relates to a computer program product arranged to cause a coherent scatter imaging system to carry out the method as set out above.

Specific embodiments of the invention will now be described purely by way of example, with reference to the accompanying drawings, in which:

Figure 1 shows a CSCT apparatus according to embodiments of the invention;
Figure 2 illustrates the beam paths used in the embodiment of the invention; and
Figure 3 is a flow diagram illustrating a method used in a first embodiment of the invention;
Figure 4 is a highly schematic drawing illustrating the spectrum recorded in the invention;
Figure 5 is a flow diagram illustrating a method used in a second embodiment of the invention;
Figure 6 is a flow diagram illustrating a method used in a third embodiment of the invention;
Figure 7 is a flow diagram illustrating a method used in a fourth embodiment of the invention; and
Figure 8 is a diagram of the beam paths used in the fourth embodiment.

The diagrams are schematic and not to scale.

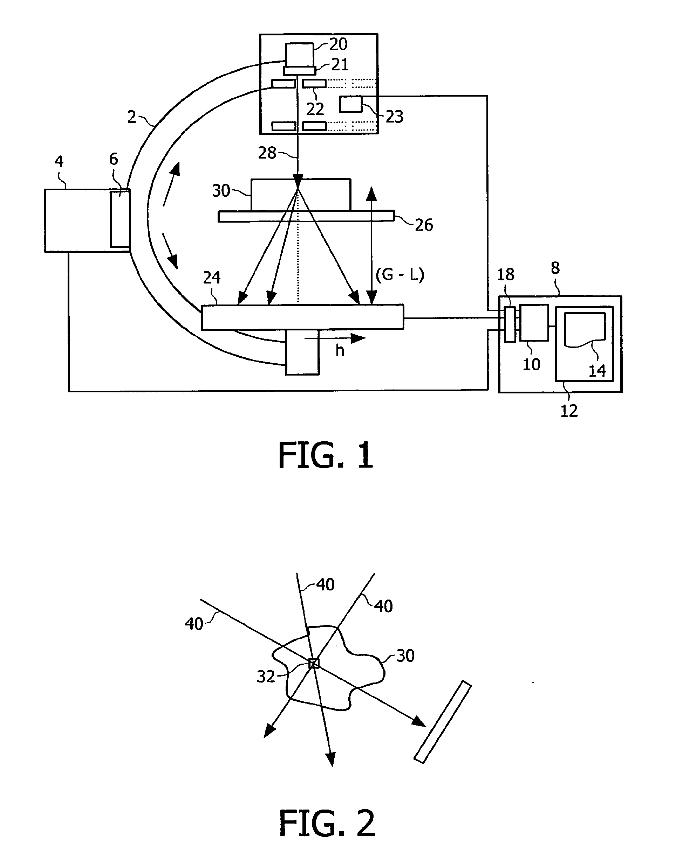

Referring to Figure 1, a first embodiment of the invention includes a C-arm 2 provided on mounting 4 and connected to driver 6 for driving the C-arm into any of a wide variety of positions controlled by controller 8. The C-arm supports an X-ray source 20, a collimator 22, and a detector 24. The collimator 22 is moveable, driven by driver 23 between two positions, one in which the collimator 22 is introduced into the beam (as shown by the solid lines) and one in which it is out of the beam path (as shown by the dotted lines).

The C-arm 2 can be driven by driver 6 to rotate the C-arm to orient the source 20 and detector 24 at many different angles. The C-arm may also be driven to orient the source and detector by rotating the arm in a direction out of the plane of the paper so that multiple three dimensional X-ray beam directions are possible.

The controller 8 includes a processor 10 and memory 12, the memory 12 including code 14 for controlling the controller to cause it to drive the C-arm into selected positions as well as code adapted to cause the controller to analyse the data. The controller is connected to the C-arm system through interface 18.

A sample support 26 is provided for holding sample 30. Conveniently, in the case of a baggage handling system, the sample support may be a conveyor belt. Alternatively, the sample support 26 may be a patient support for medical applications.

The C-arm 2 is set up so that X-rays are emitted from the X-ray source 20 and collimated in the collimator 22 to be directed as a pencil beam 28 through the sample 30, and then picked up by the detector 24 which converts the incident intensity into an electrical signal and supplies that signal to controller 8. The detector 24 is a multichannel detector that detects X-rays as a function of position, and accordingly as a function of scatter angle. The source 20 is preferably as monochromatic as possible to ensure as accurate a relationship as possible between the measured scattering angle and the inverse scattering wavevector q. Accordingly, optional monochromator 21 may be provided in the beam 28. In alternative arrangements, a beam filter may be used to tailor the spectrum.

In use, a sample 30 is placed on sample support 26 without the collimator in the beam path and the apparatus is used in a conventional mode without using coherent scattering information. In this conventional mode X-rays are provided from the source, illuminating the sample with the X-rays and capturing an image of the sample on the multichannel X-ray detector 24.

The image as captured may be a conventional X-ray image.

However, it is preferred to use a method that does not just image the sample but that calculates absorption as a function of position within a sample. This can be done by 3d -reconstruction using a CT scanner with a fan-beam or cone beam geometry, for example moving on a helical, a circular, or a sequential relative object trajectory. A C-arm system moving along an arbitrary trajectory may be used.

The reason that such calculation methods are preferred is that the calculation of the absorption coefficient in the region of interest allows the identification of a region of interest 32 having a suspicious absorption coefficient. Further, the calculation of an absorption map of the complete sample can be used for absorption correction of subsequently measured spectra.

This CT calculation or X-ray image may reveal one or more suspicious regions of interest 32 in the sample. These may be small parts of the sample, for example less than 10% of the whole sample volume and preferably less than 2% or even 1 % of the volume.

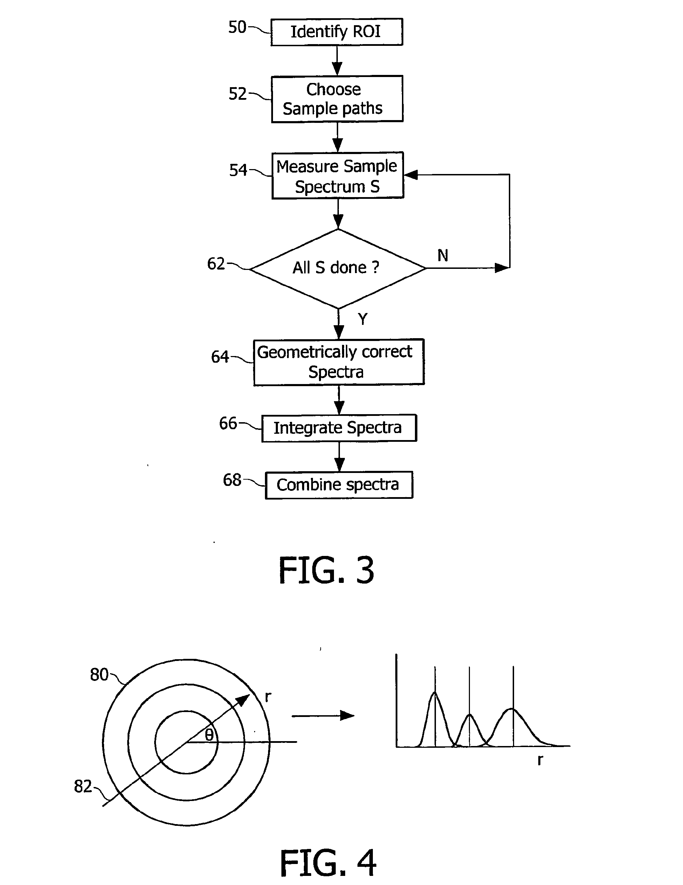

The apparatus may then be used in a CSCT mode as follows to provide further information about the region of interest 32, starting from the identification of the region of interest as illustrated at step 50 in Figure 3.

A number of suitable sample beam paths through the region of interest are calculated (step 52).

The different sample paths 40 (Figure 2) are selected in step 52 with a number of desiderata in mind.

Firstly, the absorption of X-rays along the path should not be too large, as well as absorption along the outwards path of scattered photons.

Secondly, the paths should be in directions that are as different as possible, to illuminate the region of interest in as many different directions as possible.

Thirdly, regions giving a strongly structured scattered form factor should be avoided.

It will not be possible to meet all of these criteria, so a reasonable number of paths are selected that go some way to meeting these criteria.

In this CSCT mode, collimator 22 is introduced in front of the source 20 to provide a single pencil beam 28 of X-rays.

Firstly the pencil beam 28 is directed along the first sample path 40 through the region of interest 32 and the sample spectrum $S_1$ measured on the multichannel detector 24 (step 54). Intensity is measured as a function of position across the detector, which position is related to the inverse scattering wavevector (q ).

Next, a second spectrum $S_2$ is obtained using a different second sample path 40 through the region of interest 32.

This procedure may be repeated if required one or more times, to provide a third spectrum $S_3$, a fourth spectrum $S_4$ and so on, using further sample paths and reference paths 40.

The sample paths are illustrated schematically in Figure 2. Note that it is in general preferable for the sample paths to be in a number of different orientations, and not all in the same plane.

After each spectrum is determined, a test (step 62) is carried out to see if all precalculated sample paths have been used. If not, step 54 is repeated until all paths have been used. It will be appreciated that it is not necessary to precalculate all sample paths, and in some examples some sample paths may be calculated after taking one or more measurements.

The measured spectra have as their x-axis a position/distance coordinate (r in Figure 4). In order to be compared with standard spectra the spectra need to be corrected to have a standard coordinate along the x-axis, conveniently the inverse scattering wavevector q. Further correction to the absorption values is also required.

It will be noted that the distances of the region of interest from the X-ray source and the detector are not necessarily the same in each spectrum. For example, if the region of interest is close to the detector a smaller distance on the detector will correspond to a particular q value than in the case that the region of interest is far from the detector.

Accordingly, the difference spectra D are first expanded or shrunk along their respective x-axes by using the q scale for scattering from the region of interest 32. The measured spectra have as their x-axis a position coordinate. The scattering wavevector q is given (in a small angle approximation) by:

$$q = r / [2 \lambda (G-L)].$$

G is the distance from source to detector, L the distance from source to region of interest, and h the linear offset of each point of the spectrum from the central, unscattered point. A is the wavelength of the X-rays used.

An optional absorption correction may be provided at this point, to correct for the absorption in the sample 30 using the absorption as a function of position within the sample. This information will be known from the initial scan determining the region of interest if a CT approach is carried out to determine the region of interest. This optional absorption correction may alternatively be carried out before plotting the spectra as a function of q.

Next, a geometric correction is performed in order to obtain a scatter spectrum which is quantitatively correct. Each point in the spectra is multiplied with a respective geometric correction factor (GCF). The GCF takes into account two effects: firstly, that the effective detector area of the off-plane detector elements decreases with an increasing scatter angle and, secondly, that the solid angle of a scattered beam which reaches the detector element decreases with the distance of this element to the scatter center.

The GCF for an off-plane detector element is given by: $GCF = A (G-L) / (r^2 + (G-L)^2)^{3/2}$, where A denotes the detector area of one detector element.

Note that such simple multiplication by a geometric correction factor is relatively straightforward since only the scattered spectra from a small region of interest are of interest. In general, the calculation of coherent scatter spectra over the thickness of the sample would require a large amount of data and computing resources, since different parts of the sample will be at different distances from the detector and source and it would not be possible to simply multiply the measured spectra by a correction factor. The possibility of doing so in the invention makes the approach described here much simpler than in prior approaches for samples of significant thickness, involving both less computing power and requiring less data to be collected than in prior approaches. This latter benefit is of particular advantage since it allows the total X-ray dose to be lower.

Next, in order to reduce noise, the angular symmetry of the measured spectra is used. Each spectrum is circularly symmetric (Fig. 4), and so the central point 82 of each spectrum 80 is identified and the spectrum integrated (step 66) over all angles θ to provide a spectrum of measured x-ray intensity as a function of distance from the centre.

In the first embodiment, the geometrically corrected spectra are then simply added together to obtain a combined spectrum C (Step 68).

The combined spectrum is then compared with spectra from a variety of materials to identify the material or materials involved.

In this way the composition of the region of interest can be determined.

In a second embodiment of a method according to the invention, the mesurement proceeds as in the first embodiment to provide the geometrically corrected integrated spectra S at the end of step 66.

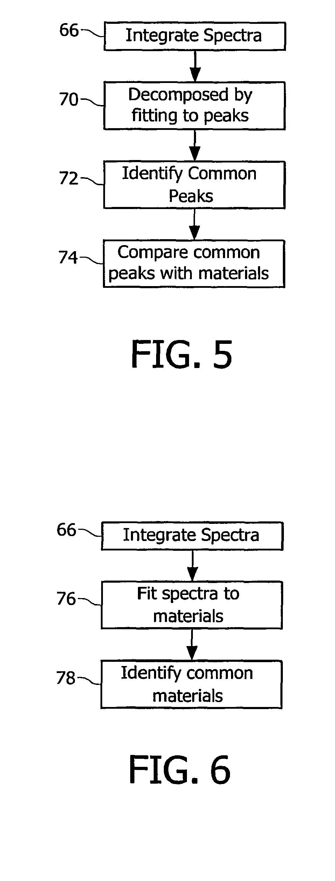

Then, the spectra are decomposed to a plurality of peaks (step 70) as illustrated in Figure 5. Conveniently, the spectra are fitted to Gaussian peaks with a certain scatter angle position and width. Thus, each spectrum S will provide a set of values of peak position and peak width.

The rays 40 intersect only in the region of interest and so peaks from materials present in the region of interest 32 should appear in all spectra. Conversely, those peaks only appearing in one measured spectrum should be peaks originating from parts of the sample away from the region of interest.

Therefore, in step 72, peaks occurring in more than a predetermined number of spectra are identified and these peaks used to analyse the region of interest. The predetermined number is at least two and preferably less than the total number of spectra measured. The peaks are compared (step 74) with materials tables giving the peaks of a number of substances to identify the substance present in the region of interest.

Note that in alternative versions of this embodiment, the geometric corrections can be carried out after decomposing the spectra to form a plurality of peaks.

In a third embodiment, the method again proceeds up until step 66 where the geometric correction has been applied.

In the third embodiment, processing then continues to fit (step 76) each spectrum to the peaks of a number of different possible materials using a table of materials and their X-ray coherent scattering properties.

Those materials common to the different spectra are identified as likely materials of the region of interest (step 78).

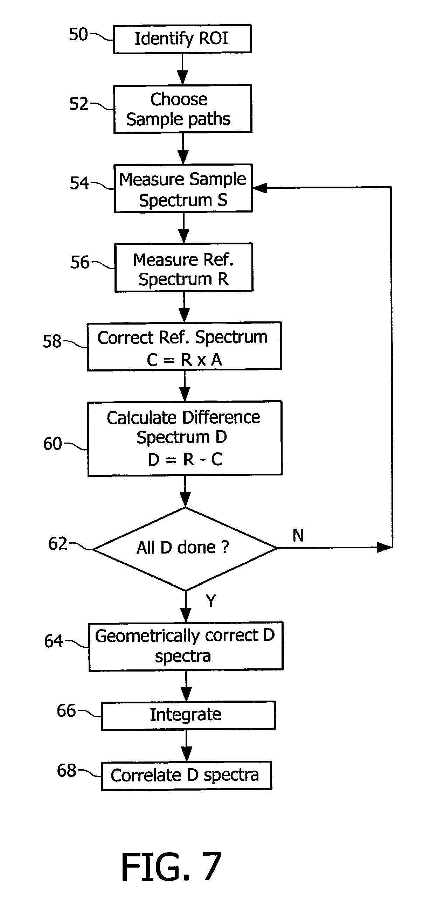

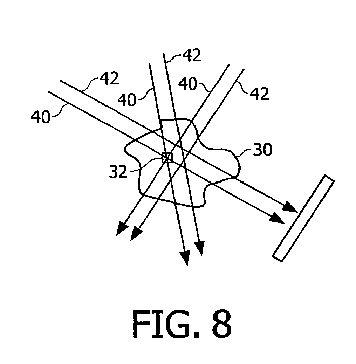

In a fourth embodiment, a further refinement is used. In this case, the method uses reference beams not passing through the region of interest as well as sample beams passing through the region of interest. The flow diagram of Figure 7 and the path diagram of Figure 8 illustrate this process.

After step 52 of identifying suitable sample paths, the pencil beam 28 is directed along the first sample path 40 through the region of interest 32 and the sample spectrum $S_1$ measured on the multichannel detector 24 (step 54). Intensity is measured as a function of position across the detector, which position is related to the inverse scattering wavevector (q).

Next, the pencil beam 28 is directed along one or more first reference paths 42, parallel to the first sample path 40 but not passing through the region of interest 32, and the reference spectrum $R_1$ measured for these one or more reference paths 42 (step 56).

The reference path or paths 42 are selected such that the absorption along the paths is roughly the same as along the sample path 40. To correct for any slight difference in the measured absorption, the reference path spectrum or spectra are absorption corrected by multiplying the spectrum by an absorption correction factor $A_1$ to arrive at an absorption corrected spectrum $C_1$, where $C_1 = R_1 \times A_1$ (step 58)

Then, the corrected spectrum is subtracted from the sample spectrum to obtain a first difference spectrum $D_1$ that mainly yields information about the region of interest; $D_1 = S_1 - C_1$ (step 60).

This procedure is repeated if required one or more times, to provide a second difference spectrum $D_2$, a third difference spectrum $D_3$, a fourth difference spectrum $D_4$ and so on, using further sample paths and reference paths 40,42.

After each difference spectrum is determined, a test (step 62) is carried out to see if all precalculated sample paths have been used. If not, steps 54 to 60 are repeated until all paths have been used. It will be appreciated that it is not necessary to precalculate all sample paths, and in alternate embodiments some sample paths may be calculated after taking one or more measurements.

Processing then continues as in any of the first to third embodiments above to combine the various spectra and identify the materials of the region of interest.

Although the above description uses a CT system, the invention is also applicable to other configurations, in particular to a cone beam system.

The system is not limited to baggage handling but may be used wherever X-rays may be used, for example for imaging of the human or animal body, as well as for materials evaluation.

## Claims

1. A method of operating a coherent-scatter imaging system having a source (20), a collimator (22) and a multi-channel detector (24), the method comprising:

   carrying out an X-ray or computed tomography (CT) scan to identify a region of interest (32) in a sample object (30);

   measuring a respective plurality of sample spectra ($S_1$, $S_2$, $S_3$) by passing a pencil X-ray beam (28) through the sample along a plurality of sample paths (40), each passing through the region of interest (32), and measuring the respective plurality of sample spectra ($S_1$, $S_2$, $S_3$) of scattered X-rays as a function of position at the detector (24);

   correcting the sample spectra ($S_1$, $S_2$, $S_3$) based on the respective distances between the region of interest (32) and the detector (24) to obtain corrected spectra ($C_1$, $C_2$, $C_3$); and

   combining the corrected spectra ($C_1$, $C_2$, $C_3$) by correlating the corrected spectra ($C_1$, $C_2$, $C_3$) to identify common features and analysing the common features as the features present in the region of interest (32).

2. A method according to claim 1 wherein the step of identifying a region of interest (32) includes calculating the three dimensional distribution of absorption coefficients in the sample (30).

3. A method according to claim 1 or 2 wherein the step of combining the corrected spectra ($C_1$, $C_2$, $C_3$) includes

   providing a materials table defining the spectra of a plurality of different materials;

   fitting each of the measured corrected spectra ($C_1$, $C_2$, $C_3$) to the materials table to identify the materials of each spectrum; and

   identifying the materials common to the plurality of corrected spectra as materials that may be present in the region of interest (32).

**4.** A method according to any preceding claim wherein the step of combining the corrected spectra ($C_1$, $C_2$, $C_3$) includes fitting the corrected spectra ($C_1$, $C_2$, $C_3$) to a plurality of peaks having fitting parameters of peak position and peak width, and identifying peaks common between a plurality of spectra.

**5.** A method according to any preceding claim wherein the step of measuring a respective plurality of sample spectra ($S_1$, $S_2$, $S_3$) includes, for each spectrum: passing a reference beam (42) through the sample (30), the reference beam (42) being parallel to the sample beam (40) but not passing through the region of interest (32), to obtain a reference spectrum (R); and correcting the sample spectrum (S) by subtracting the reference spectrum (R).

**6.** A controller (8) for a coherent-scatter imaging system having a collimated X-ray source (20, 22) and a detector (24), comprising:

> an interface (18) for interfacing with the coherent scatter imaging system adapted to pass control signals to the coherent scatter imaging system and to receive image data from the detector (24);
> and code (14) for causing the coherent scatter imaging system and controller (8):

>> to carry out an X-ray or CT scan to identify a region of interest (32) in a sample object (30);
>> to pass a pencil X-ray beam (28) through the sample (30) along a plurality of sample paths (40), passing through the region of interest (32), and measuring a respective plurality of sample spectra ($S_1$, $S_2$, $S_3$) of scattered X-rays as a function of position at the detector (24);
>> to correct each of the spectra ($S_1$, $S_2$, $S_3$) based on the distance between the region of interest (32) and the detector (24) to obtain corrected spectra ($C_1$, $C_2$, $C_3$); and
>> to combine the corrected spectra ($C_1$, $C_2$, $C_3$) by correlating the corrected spectra ($C_1$, $C_2$, $C_3$) to identify common features and analysing the common features as the features present in the region of interest (32).

**7.** A controller according to claim 6 further comprising a materials table defining the spectra of a plurality of different materials;

> the code being adapted to fit each of the measured corrected spectra ($C_1$, $C_2$, $C_3$) to the materials table to identify the materials of each spectrum; and
> to identify the materials common to the corrected spectra ($C_1$, $C_2$, $C_3$) as materials that may be present in the region of interest.

**8.** A controller according to claim 6 or 7 wherein code to combine the corrected spectra ($C_1$, $C_2$, $C_3$) is adapted to fit the corrected spectra ($C_1$, $C_2$, $C_3$) to a plurality of peaks having fitting parameters of peak position and peak width, and to identify peaks common between a plurality of spectra ($C_1$, $C_2$, $C_3$).

**9.** A controller according to claim 6, 7 or 8 wherein the code is adapted to pass a reference beam (42) through the sample (30), the reference beam (42) being parallel to the sample beam (40) but not passing through the region of interest (32), to obtain a reference spectrum (R); and to correct the spectrum (S) by subtracting the reference spectrum (R)

**10.** A coherent scatter imaging system comprising:

> an X-ray source (20) for generating X-rays;
> a collimator (22) for producing a collimated pencil beam of X-rays from the X-ray source;
> a sample support (26) for holding a sample (30);
> a multichannel x-ray detector (24) for detecting x-rays elastically scattered by the sample as a function of position;
> a framework (2) for supporting the X-ray source (20), collimator (22) and multichannel x-ray detector (24);
> a driver (6) for moving the framework (2); and
> a controller (8) according to any of claims 6 to 9.

**11.** A coherent scatter imaging system according to claim 10 wherein the collimator (22) is movable between a first position away from the X-ray source (20) and a second position in line with the X-ray source (20) to produce the collimated pencil beam (28) of X-rays, the X-ray source (20) producing a wider beam of X-rays with the collimator (22) in the first position than the pencil beam (28) produced with the collimator (22) in the second position.

**12.** A computer program product recorded on a data carrier, the computer program product including code (14) for causing a coherent scatter imaging system to carry out a method according to any of claims 1 to 5.

**Patentansprüche**

1. Verfahren zum Betrieb eines Systems zur Bildgebung durch kohärente Streuung mit einer Quelle (20), einem Kollimator (22) und einem Mehrkanal-Detektor (24),
wobei das Verfahren Folgendes umfasst:

   Durchführen eines Röntgen- oder Computertomographie-(CT) Scans zum Identifizieren einer interessierenden Region (32) in einem Probeobjekt (30);
   Messen einer jeweiligen Vielzahl von Probenspektren ($S_1$, $S_2$, $S_3$) durch Leiten eines schmalen Röntgenstrahlenbündels (28) auf einer Vielzahl von Abtastwegen (40) durch die Probe, wobei jedes die interessierende Region (32) durchquert, und Messen der jeweiligen Vielzahl von Probenspektren ($S_1$, $S_2$, $S_3$) der gestreuten Röntgenstrahlung als Funktion der Position am Detektor (24);
   Korrigieren der Probenspektren ($S_1$, $S_2$, $S_3$) basierend auf den jeweiligen Abständen zwischen der interessierenden Region (32) und dem Detektor (24), um korrigierte Spektren ($C_1$, $C_2$, $C_3$) zu erhalten; und
   Kombinieren der korrigierten Spektren ($C_1$, $C_2$, $C_3$) durch Korrelieren der korrigierten Spektren ($C_1$, $C_2$, $C_3$), um gemeinsame Merkmale zu identifizieren, und Analysieren der gemeinsamen Merkmale als die in der interessierenden Region (32) vorhandenen Merkmale.

2. Verfahren nach Anspruch 1, wobei der Schritt des Identifizierens einer interessierenden Region (32) das Berechnen der dreidimensionalen Verteilung von Absorptionskoeffizienten in der Probe (30) umfasst.

3. Verfahren nach Anspruch 1 oder 2, wobei der Schritt des Kombinierens der korrigierten Spektren ($C_1$, $C_2$, $C_3$) Folgendes umfasst:

   Bereitstellen einer Materialtabelle, die die Spektren von einer Vielzahl unterschiedlicher Materialien definiert;
   Vergleichen von jedem der gemessenen korrigierten Spektren ($C_1$, $C_2$, $C_3$) mit der Materialtabelle, um die Materialien jedes Spektrums zu identifizieren; und
   Identifizieren der Materialien, die der Vielzahl von korrigierten Spektren gemeinsam sind, als Materialien, die in der interessierenden Region (32) vorhanden sein können.

4. Verfahren nach einem der vorhergehenden Ansprüche, wobei der Schritt des Kombinierens der korrigierten Spektren ($C_1$, $C_2$, $C_3$) das Vergleichen der korrigierten Spektren ($C_1$, $C_2$, $C_3$) mit einer Vielzahl von Peaks mit Vergleichsparametern der Peakposition und Peakbreite und das Identifizieren von Peaks umfasst, die einer Vielzahl von Spektren gemeinsam sind.

5. Verfahren nach einem der vorhergehenden Ansprüche, wobei der Schritt des Messens einer jeweiligen Vielzahl von Probenspektren ($S_1$, $S_2$, $S_3$) für jedes Spektrum Folgendes umfasst: Leiten eines Referenzstrahlenbündels (42) durch die Probe (30), wobei das Referenzstrahlenbündel (42) parallel zu dem Abtaststrahlenbündel (40) verläuft, aber die interessierende Region (32) nicht durchquert, um ein Referenzspektrum (R) zu erhalten; und Korrigieren des Probenspektrums (S) durch Subtrahieren des Referenzspektrums (R).

6. Controller (8) für ein System zur Bildgebung durch kohärente Streuung mit einer kollimierten Röntgenquelle (20, 22) und einem Detektor (24), wobei der Controller Folgendes umfasst:

   eine Schnittstelle (18) zum Verbinden des Systems zur Bildgebung durch kohärente Streuung, die vorgesehen ist, um dem System zur Bildgebung durch kohärente Streuung Steuersignale zukommen zu lassen und Bilddaten von dem Detektor (24) zu empfangen;
   und Code (14), um das System zur Bildgebung durch kohärente Streuung und den Controller (8) zu veranlassen:

      einen Röntgen- oder CT-Scan durchzuführen, um eine interessierende Region (32) in einem Probeobjekt (30) zu identifizieren;
      ein schmales Röntgenstrahlenbündel (28) auf einer Vielzahl von Abtastwegen (40), die die interessierende Region durchqueren, durch die Probe zu leiten, und eine jeweilige Vielzahl von Probenspektren ($S_1$, $S_2$, $S_3$) der gestreuten Röntgenstrahlung als Funktion der Position am Detektor (24) zu messen;
      jedes der Spektren ($S_1$, $S_2$, $S_3$) basierend auf dem Abstand zwischen der interessierenden Region (32) und dem Detektor (24) zu korrigieren, um korrigierte Spektren ($C_1$, $C_2$, $C_3$) zu erhalten; und
die korrigierten Spektren ($C_1$, $C_2$, $C_3$) durch Korrelieren der korrigierten Spektren ($C_1$, $C_2$, $C_3$) zu kombinieren, um gemeinsame Merkmale zu identifizieren, und die gemeinsamen Merkmale als die in der interessierenden Region (32) vorhandenen Merkmale zu analysieren.

**7.** Controller nach Anspruch 6, der weiterhin eine Materialtabelle umfasst, die die Spektren von einer Vielzahl unterschiedlicher Materialien definiert;
wobei der Code vorgesehen ist, um jedes der gemessenen korrigierten Spektren ($C_1$, $C_2$, $C_3$) mit der Materialtabelle zu vergleichen, um die Materialien jedes Spektrums zu identifizieren; und
um die Materialien, die der Vielzahl von korrigierten Spektren gemeinsam sind, als Materialien zu identifizieren, die in der interessierenden Region (32) vorhanden sein können.

**8.** Controller nach Anspruch 6 oder 7, wobei der Code zum Kombinieren der korrigierten Spektren ($C_1$, $C_2$, $C_3$) vorgesehen ist, um die korrigierten Spektren ($C_1$, $C_2$, $C_3$) mit einer Vielzahl von Peaks mit Vergleichsparametem der Peakposition und Peakbreite zu vergleichen, und um Peaks zu identifizieren, die einer Vielzahl von Spektren ($C_1$, $C_2$, $C_3$) gemeinsam sind.

**9.** Controller nach Anspruch 6, 7 oder 8, wobei der Code vorgesehen ist, um ein Referenzstrahlenbündel (42) durch die Probe (30) zu leiten, wobei das Referenzstrahlenbündel (42) parallel zu dem Abtaststrahlenbündel (40) verläuft, aber die interessierende Region (32) nicht durchquert, um ein Referenzspektrum (R) zu erhalten; und um das Probenspektrum (S) durch Subtrahieren des Referenzspektrums (R) zu korrigieren.

**10.** System zur Bildgebung durch kohärente Streuung, das Folgendes umfasst:

eine Röntgenquelle (20) zum Erzeugen von Röntgenstrahlen;
einen Kollimator (22) zum Erzeugen eines von der Röntgenquelle ausgehenden kollimierten schmalen Röntgenstrahlenbündels;
eine Probenhalterung (26) zum Halten einer Probe (30);
einen Mehrkanal-Röntgendetektor (24) zum Detektieren von Röntgenstrahlen, die durch die Probe als eine Funktion der Position elastisch gestreut werden;
ein Gestell (2) zum Tragen der Röntgenquelle (20), des Kollimators (22) und des Mehrkanal-Röntgendetektors (24);
einen Antrieb (6) zum Bewegen des Gestells (2); und
einen Controller (8) nach einem der Ansprüche 6 bis 9.

**11.** System zur Bildgebung durch kohärente Streuung nach Anspruch 10, wobei der Kollimator (22) zwischen einer ersten Position weg von der Röntgenquelle (20) und einer zweiten Position in einer Linie mit der Röntgenquelle (20) bewegbar ist, um das kollimierte schmale Röntgenstrahlenbündel (28) zu erzeugen, wobei die Röntgenquelle (20), wenn sich der Kollimator (22) in der ersten Position befindet, ein Röntgenstrahlenbündel erzeugt, das breiter ist als das Schmalbündel (28), welches erzeugt wird, wenn sich der Kollimator (22) in der zweiten Position befindet.

**12.** Computerprogrammprodukt aufgezeichnet auf einem Datenträger, wobei das Computerprogrammprodukt Code (14) umfasst, um das System zur Bildgebung durch kohärente Streuung zu veranlassen, ein Verfahren nach einem der Ansprüche 1 bis 5 durchzuführen.

**Revendications**

**1.** Procédé de fonctionnement d'un système d'imagerie par diffusion cohérente ayant une source (20), un collimateur (22) et un détecteur multivoie (24), le procédé comprenant les étapes suivantes consistant à :

effectuer un balayage de tomographie (CT) par ordinateur ou à rayons X de manière à identifier une région d'intérêt (32) dans un objet d'échantillon (30),
mesurer une pluralité respective de spectres d'échantillon ($S_1$, $S_2$, $S_3$) en faisant passer un faisceau ponctuel de rayons X (28) à travers l'échantillon le long d'une pluralité de chemins d'échantillon (40), chacun passant à travers la région d'intérêt (32), et à mesurer la pluralité respective de spectres d'échantillon ($S_1$, $S_2$, $S_3$) de rayons X diffusés en fonction de la position à l'endroit du détecteur (24);
corriger les spectres d'échantillon ($S_1$, $S_2$, $S_3$) sur la base des distances respectives comprises entre la région d'intérêt (32) et le détecteur (24) pour obtenir des spectres corrigés ($C_1$, $C_2$, $C_3$); et

combiner les spectres corrigés ($C_1$, $C_2$, $C_3$) en corrélant les spectres corrigés ($C_1$, $C_2$, $C_3$) de manière à identifier des dispositifs communs et à analyser les dispositifs communs en tant que les dispositifs communs qui sont présents dans la région d'intérêt (32).

2. Procédé selon la revendication 1, dans lequel l'étape suivante consistant à identifier une région d'intérêt (32) comprend l'étape consistant à calculer la distribution tridimensionnelle de coefficients d'absorption dans l'échantillon (30).

3. Procédé selon la revendication 1 ou 2, dans lequel l'étape consistant à combiner les spectres corrigés ($C_1$, $C_2$, $C_3$) comprend les étapes suivantes consistant à:

fournir une table des matières définissant les spectres d'une pluralité de matériaux différents;
adapter chacun des spectres corrigés mesurés ($C_1$, $C_2$, $C_3$) à la table des matières de manière à identifier les matériaux de chaque spectre; et
identifier les matériaux qui sont communs à la pluralité de spectres corrigés en tant que des matériaux qui peuvent être présents dans la région d'intérêt (32).

4. Procédé selon l'une quelconque des revendications précédentes 1 à 3, dans lequel l'étape suivante consistant à combiner les spectres corrigés ($C_1$, $C_2$, $C_3$) comprend l'adaptation des spectres corrigés ($C_1$, $C_2$, $C_3$) à une pluralité de crêtes ayant des paramètres convenables de position maximale et de largeur maximale, et à identifier des crêtes qui sont communes entre une pluralité de spectres.

5. Procédé selon l'une quelconque des revendications précédentes 1 à 4, dans lequel l'étape suivante consistant à mesurer une pluralité respective de spectres d'échantillon ($S_1$, $S_2$, $S_3$) comprend, pour chaque spectre, les étapes suivantes consistant à faire passer un faisceau de référence (42) à travers l'échantillon (30), le faisceau de référence (42) étant parallèle au faisceau d'échantillon (40) mais ne passant pas à travers la région d'intérêt (32), à obtenir un spectre de référence (R), et à corriger le spectre d'échantillon (S) en soustrayant le spectre de référence (R).

6. Contrôleur (8) pour un système d'imagerie par diffusion cohérente ayant une source collimatée à rayons X (20, 22) et un détecteur (24), comprenant:

une interface (18) pour s'interfacer avec un système d'imagerie par diffusion cohérente qui est adaptée de manière à faire passer des signaux de commande au système d'imagerie par diffusion cohérente et à recevoir des données d'image en provenance du détecteur (24);
et un code (14) pour effectuer que le système d'imagerie par diffusion cohérente et le contrôleur (8) réalisent un balayage de tomographie par ordinateur ou à rayons X de manière à identifier une région d'intérêt (32) dans un objet d'échantillon (30);
et comprenant les étapes suivantes consistant à:

faire passer un faisceau ponctuel de rayons X (28) à travers l'échantillon (30) le long d'une pluralité de chemins d'échantillon (40) passant à travers la région d'intérêt (32) et à mesurer une pluralité respective de spectres d'échantillon ($S_1$, $S_2$, $S_3$) de rayons X diffusés en fonction de la position à l'endroit du détecteur (24);
corriger chacun des spectres ($S_1$, $S_2$, $S_3$) sur la base de la distance comprise entre la région d'intérêt (32) et le détecteur (24) afin d'obtenir les spectres ($C_1$, $C_2$, $C_3$); et
combiner les spectres corrigés ($C_1$, $C_2$, $C_3$) en corrélant les spectres corrigés ($C_1$, $C_2$, $C_3$) de manière à identifier les dispositifs communs et à analyser les dispositifs communs en tant que les dispositifs qui sont présents dans la région d'intérêt (32).

7. Contrôleur selon la revendication 6, comprenant encore une table des matières définissant les spectres d'une pluralité de matériaux différents;

le code étant adapté de manière à faire correspondre chacun des spectres corrigés mesurés ($C_1$, $C_2$, $C_3$) à la table des matières afin d'identifier les matériaux de chaque spectre; et
et à identifier les matériaux qui sont communs aux spectres corrigés ($C_1$, $C_2$, $C_3$) en tant que les matériaux qui peuvent être présents dans la région d'intérêt.

8. Contrôleur selon la revendication 6 ou 7, dans lequel le code pour combiner les spectres corrigés ($C_1$, $C_2$, $C_3$) est

adapté de manière à faire correspondre les spectres corrigés ($C_1$, $C_2$, $C_3$) à une pluralité de crêtes ayant des paramètres convenables de position maximale et de largeur maximale, et à identifier des crêtes qui sont communes entre une pluralité de spectres ($C_1$, $C_2$, $C_3$).

9. Contrôleur selon la revendication 6, 7 ou 8, dans lequel le code est adapté de manière à faire passer un faisceau de référence (42) à travers l'échantillon (30), le faisceau de référence (42) étant parallèle au faisceau d'échantillon (40) mais ne passant pas à travers la région d'intérêt (32), à obtenir un spectre de référence (R) et à corriger le spectre (S) en soustrayant le spectre de référence (R).

10. Système d'imagerie par diffusion cohérente, comprenant:

    une source à rayons X (20) pour générer des rayons X;
    un collimateur (22) pour produire un faisceau ponctuel collimaté de rayons X en provenance de la source à rayons X;
    un support d'échantillon (26) pour tenir un échantillon (30);
    un détecteur multivoie à rayons X (24) pour détecter des rayons X qui sont d'une manière élastique diffusés par l'échantillon en fonction de la position;
    un cadre (2) pour supporter la source à rayons X (20), le collimateur (22) et le détecteur multivoie à rayons X (24);
    un dispositif d'entraînement (6) pour déplacer le cadre (2); et
    un contrôleur (8) selon l'une quelconque des revendications précédentes 6 à 9.

11. Système d'imagerie par diffusion cohérente selon la revendication 10, dans lequel le collimateur (22) est mobile entre une première position qui se situe dans un sens s'éloignant de la source à rayons X (20) et une deuxième position qui est alignée par rapport à la source à rayons X (20) afin de produire le faisceau ponctuel collimaté (28) de rayons X, la source à rayons X (20) produisant un plus large faisceau de rayons X avec le collimateur (22) dans la première position que le faisceau ponctuel (28) qui est produit avec le collimateur (22) dans la deuxième position.

12. Produit de programme informatique qui est enregistré sur un support de données, le produit de programme informatique comprenant le code (14) pour effectuer qu'un système d'imagerie par diffusion cohérente met en oeuvre un procédé selon l'une quelconque des revendications précédentes 1 à 5.

EP 1 792 209 B1

FIG. 1

FIG. 2

13

50 ─ Identify ROI

52 ─ Choose
Sample paths

54 ─ Measure Sample
Spectrum S

62 ─ All S done ?   N

Y

64 ─ Geometrically correct
Spectra

66 ─ Integrate Spectra

68 ─ Combine spectra

# FIG. 3

80
82
r
θ
r

# FIG. 4

66 — | Integrate Spectra |

70 — | Decomposed by fitting to peaks |

72 — | Identify Common Peaks |

74 — | Compare common peaks with materials |

# FIG. 5

66 — | Integrate Spectra |

76 — | Fit spectra to materials |

78 — | Identify common materials |

# FIG. 6

50 — Identify ROI

52 — Choose Sample paths

54 — Measure Sample Spectrum S

56 — Measure Ref. Spectrum R

58 — Correct Ref. Spectrum C = R x A

60 — Calculate Difference Spectrum D D = R - C

62 — All D done ? N

Y

64 — Geometrically correct D spectra

66 — Integrate

68 — Correlate D spectra

# FIG. 7

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20020150202 A1
- US 20040076265 A
- US 5692029 A
- US 6054712 A

**Non-patent literature cited in the description**

- **STRECKER et al.** Detection of Explosives in Airport Baggage using Coherent X-ray Scatter. *SPIE,* vol. 2092
- *Substance Detection Systems,* 1993, 399-410
- **SPELLER et al.** Substance Detection Systems. *SPIE,* 1993, vol. 2092, 366-377